# EUROPÄISCHE PATENTSCHRIFT

(11) **EP 1 845 026 B1**
(45) Veröffentlichungstag und Bekanntmachung des Hinweises auf die Patenterteilung: **24.12.2008**
(21) Anmeldenummer: 07007136.0
(22) Anmeldetag: 04.04.2007
(51) Int. Cl.: B65D 33/16

(54) **Verschlussklammer und Verfahren zu deren Herstellung**
Locking clip and method for its manufacture
Pince de fermeture et son procédé de fabrication

(30) Priorität: 13.04.2006 DE 102006017537
(43) Veröffentlichungstag der Anmeldung: 17.10.2007
(73) Patentinhaber: Poly-clip System GmbH & Co. KG, 60489 Frankfurt am Main (DE)
(72) Erfinder: Schoenmaker, Hans, 63303 Dreieich (DE)
(74) Vertreter: Fritsche, Rainer

(56) Entgegenhaltungen:
- EP-A1- 0 081 250
- US-A- 4 200 962

## Beschreibung

Die Erfindung betrifft eine Verschlussklammer sowie ein Verfahren zum Herstellen von Verschlussklammern aus band- oder drahtförmigem Material zum Verschließen von schlauch- oder beutelartigen Verpackungen, wobei entlang des band-oder drahtförmigen Materials ein im wesentlichen wellenförmiges Profil mit aufeinanderfolgenden ersten und zweiten Scheitelpunkten geprägt wird. Der erste Scheitelpunkt bildet einen Klammerboden, jeweils beidseits des ersten Scheitelpunkts angrenzende Flanken bilden U-förmig abgebogene Klammerschenkel und der zweite Scheitelpunkt bildet, bezogen auf die U-Form, nach außen abgebogene Schenkelenden, an welchen zwei benachbarte Verschlussklammern trennbar zusammenhängen. Die Erfindung betrifft ferner ein Prägewerkzeug zum Herstellen von Verschlussklammern nach einem solchen Verfahren.

Derartige Verschlussklammern sind beispielsweise aus der DE 3 148 757 A1, der EP 0 337 301 A1 oder der EP 0 738 662 A1 bekannt. Diese Verschlussklammern (auch Clips genannt) werden dazu verwendet, mit flüssigem bis zäh-pastösem oder (teilweise) granularem Inhalt befüllte, schlauch- oder beutelförmige Verpackungen, Därme oder Kunstdärme einseitig bzw. beidseitig zu verschließen. Hierzu werden die typischerweise aus einem Aluminiumdrahtstrang gefertigten Clips einer Clipmaschine, wie oben beschrieben, U-förmig vorgebogen und mittels in Form der abgekröpften Schenkelenden gebildeten Verbindungsstege zusammenhängend einem ersten Verschließwerkzeug der Clipmaschine, der Matrize, zugeführt. Nachdem die gefüllte Verpackung beispielsweise mittels eines Verdrängers oder durch Abdrehen abschnittsweise zu einem Zopf eingeschnürt und somit eine Portion (Wurst) abgeteilt wurde, wird der vorderste Clip des oben beschriebenen Clipstrangs wird gegen den Zopf gedrückt und zwischen diesem und der Matrize eingespannt. Daraufhin wird der vorderste Clip mittels eines zweiten, sich auf die Matrize zu bewegenden Verschließwerkzeugs, dem Stempel, im Bereich des Verbindungssteges von dem nachfolgenden Clipstrang abgetrennt und unmittelbar anschließend um den Zopf des Verpackungsmaterials herum verschlossen. Hierbei werden die abgekröpften Schenkelenden gegen die Außenseite der Klammerschenkel gepresst und mit diesem um den Zopf des Verpackungsmaterials gebogen, wobei die Schenkelenden und Stegabschnitte stumpf gegeneinander gepresst und dabei gestaucht werden, so dass ein den Zopf des Verpackungsmaterials möglichst dicht zusammenpressender Ring entsteht.

Das Bestreben war und ist es, solche Verschlussklammern dahingehend weiterzuentwickeln, dass entweder bei gleichbleibender Materialstärke eine stets größerer Zuhaltekraft und Rutschfestigkeit erreicht wird, um einen möglichst dichten Verschluss zu gewährleisten oder umgekehrt bei gleicher Verschlussqualität Material eingespart werden kann. Insbesondere bei Verwendung von Kunststoffdärmen, z.B. aus PVC, Polyamid, Polyester oder von Kunststoffbeschichteten Faserdärmen, die eine relativ glatte Oberfläche aufweisen, stellt die Rutschfestigkeit eine große Herausforderung dar.

Zu diesem Zweck schlägt die DE 3 148 757 A1 beispielsweise vor, eine bezüglich der Breite des Materialbandes mittig angeordnete Versteifungssicke im Bereich des Klammerbodens und der im Übergang zu den Klammerschenkeln vorgesehene Verbindungsbögen anzuordnen. Die Versteifungssicke erhöht insbesondere die Festigkeit der Verschlussklammer gegen Aufbiegen.

Einen anderen Weg schlägt die EP 0 738 622 A1 ein, wonach die Verschlussklammern auf der Innenseite eine oder mehrere Rillen in Längsrichtung des Materialbandes aufweisen, um die Abrutschgefahr zu vermindern. Weiter in diese Richtung offenbart die EP 0 337 301 A1 Verschlussklammern, die auf der Innenseite der Klammerschenkel wie auch des Klammerbodens eine Vielzahl von im Wesentlichen flächendeckend und einander überkreuzend angeordneten Rillen aufweisen. Die so entstehenden Rändelmuster haben gegenüber den Längsrillen eine höhere Oberflächenrauhigkeit und verringern die Abrutschgefahr nochmals.

Aus dem US-Patent 4,200,962 geht eine Verschlussklammer hervor, mit den Merkmalen des Oberbegriffs des Anspruchs 1.

Aufgabe der vorliegenden Erfindung ist es, die Zuhaltekraft gegenüber den bekannten Verschlussklammem weiter zu verbessern und insbesondere deren Rutschfestigkeit mit einfachen Mitteln weiter zu erhöhen.

Die Aufgabe wird bei einem Verfahren der eingangs genannten Art dadurch gelöst, dass das band- oder drahtförmige Material nach innen, bezogen auf die U-Form - also in Richtung der Klammerschenkel - durchstochen wird.

Auf diese Weise erhält die Verschlussklammer einen Durchbruch mit einer Materialaufwerfung auf ihrer den Schenkeln zugewandten Innenseite. Die Materialaufwerfung bewirkt eine Versteifung und damit eine erhöhte Biegefestigkeit, da die Materialstärke (zumindest partiell) in der durch die U-Form definierten Klammerebene zunimmt. Zugleich wird die Druckbelastung der Verschlussklammer auf den umschlossenen Verpackungsmaterialzopf punktuell erhöht und damit die Haftung des Clips auf den Zopf gegenüber eine ebenen Klammerinnenseite verbessert.

Durch den Durchbruch bildet sich vorzugsweise auf der den Schenkeln zugewandten Innenseite der Verschlussklammer eine Materiataufwerfung mit einem Grat aus. Hierdurch wird die punktuelle Druckbelastung und damit die Haftreibung der Verschlussklammer weiter erhöht. Die Gratbildung ist insbesondere bei Verpackungsmaterialien unschädlich, welche eine hohe Reißfestigkeit aufweisen.

Vorzugsweise wird bei dem Verfahren das band- oder drahtförmige Material etwa mittig im Bereich des Klammerbodens durchstochen.

Die Verschlussklammer behält damit Ihre Symmetrie. Dies gewährleistet einen stabilen Umformvorgang während des Verschließens ohne Kippmomente. Der Durchbruch bzw. eine der Materialaufwerfung gegenüberliegende Einbuchtung in der Außenseite des Klammerbodens kann ferner dazu genutzt werden, die Klammer in der Matrize zu zentrieren und gegen ein Verdrehen oder Verkippen während des Verschließvorgangs zu sichern, indem die Matrize mit einem entsprechenden Vorsprung versehen wird, der in die Einbuchtung der Verschlussklammer eingreift, wenn sie in die Matrize eingelegt wird.

Das Durchstechen des band- oder drahtförmigen Materials geschieht bei dem erfindungsgemäßen Verfahren vorzugsweise während des Prägens des wellenförmigen Profils.

Auf diese Weise werden die Arbeitsschritte des Prägens eines im Wesentlichen wellenförmigen Profils einerseits und des Bildens einer Materialaufwerfung bzw. eines Durchbruchs andererseits in einem gemeinsamen Arbeitsschritt mit demselben Werkzeug ausgeführt. Hierdurch ist die Position des Durchbruchs im Bezug auf das Profil festgelegt. Das Durchstechen gestaltet sich so als vergleichsweise einfacher und prozesssicher Arbeitsschritt.

Die Materialaufwerfung ist bei der erfindungsgemäßen Verschlussklammer bevorzugt höckerförmig ausgebildet.

Hierdurch wird die punktuelle Belastung des Verpackungsmaterials im verschlossenen Zustand der Klammer nochmals erhöht. Die erfindungsgemäße Höckerform kann dadurch erzeugt werden, dass beispielsweise ein spitzer Dorn mit im Wesentlicher rundem, ovalem, oder quadratischem Querschnitt zum Durchstechen (Dornen) verwendet wird.

Gemäß einer bevorzugten Weiterbildung des Verfahrens werden dem band- oder drahtförmigen Material im Bereich der Schenkelinnenseite der Verschlussklammer in Längsrichtung Ausnehmungen eingeprägt.

Korrespondieren diese Ausnehmungen bei einem verschossenen Clip mit der gegenüberliegenden Materialaufwerfung, wird das Zopfmaterial, um welches der Clip verschlossen ist, von der Aufwerfung in die Ausnehmung verdrängt und der Zopf auf diese Weise eingeklemmt.

Weitere Aufgaben, Merkmale und Vorteile der Erfindung werden nachfolgend anhand eines Ausführungsbeispiels mit Hilfe der Zeichnungen erläutert. Es zeigen:
- Fig. 1: eine erfindungsgemäße Verschlussklammer in der Draufsicht auf die Klammerebene,
- Fig. 2: eine geschnittene Seitenansicht der Verschlussklammer aus Fig. 1 in der Klammerebenem,
- Fig. 3: eine um ein Wurstende verschlossene erfindungsgemäße Verschlussklammer und
- Fig. 4: eine Ausführungsform eines erfindungsgemäßen Prägewerkzeugs zum Herstellen der Verschlussklammer .

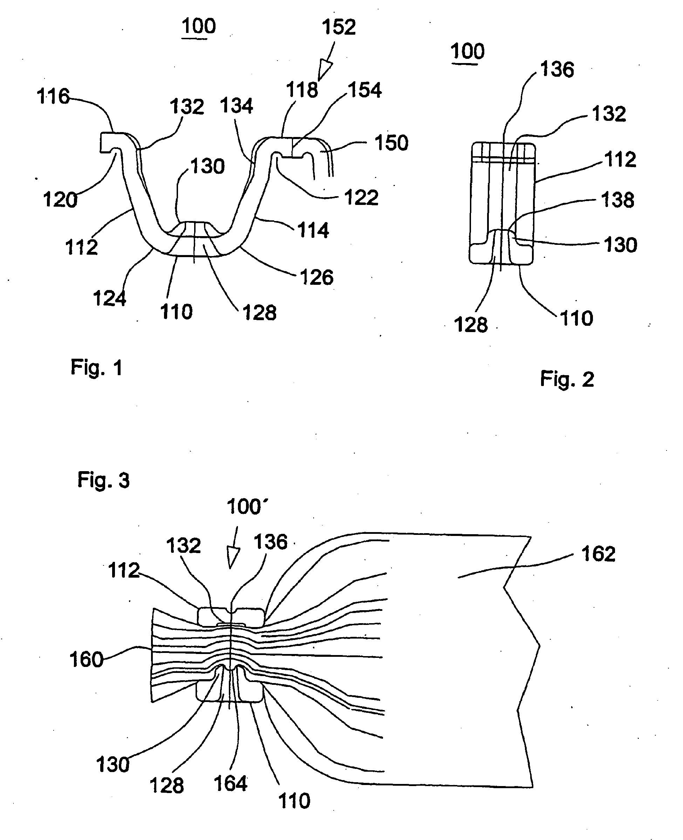

Die erfindungsgemäße Verschlussklammer 100 gemäß Fig. 1 weist einen Klammerboden 110 und zwei beidseits des Klammerbodens 110 U-förmig abgebogene Klammerschenkel 112, 114 auf. Die Schenkelenden 116, 118 sind nach außen abgebogen und weisen auf ihrer Unterseite vertiefte Einprägungen 120, 122 auf, welche gewissermaßen eine Sollknickstelle darstellen und beim Verschließen der Clips eine schärfere Umlenkung der Schenkelenden erlauben. Der Klammerboden 110 hat mittig einen geraden Abschnitt, an dem sich im Übergang an die Schenkel 112, 114 Verbindungsbögen 124, 126 anschließen. Der gerade Abschnitt dient dazu, dass die Klammer 100, welche zum Verschließen in eine Matrize eingelegt wird, nicht auf Grund eventuell ungleichmäßig an den Schenkelenden angreifender Kräfte zum Verdrehen oder Kippen neigt.

Die Verschlussklammer wird bei dem erfindungsgemäßen Herstellungsverfahren vorzugsweise während des Prägens des wellenförmigen Profils mittels eines Doms von außen, bezogen auf die U-Form, durchstochen. Hierdurch entsteht ein Durchbruch 128 und auf der Innenseite der Verschlussklammer eine Materialaufwerfung 130. Diese Materialaufwerfung 130 ist im Wesentlichen höckerförmig ausgebildet, so dass sie eine punktuelle Belastung des umschlossenen Verpackungsmaterialzopfes bewirkt.

Die Stabilisierung und/oder Zentrierung der Verschlussklammer in der Matrize beim Verschließen wird ferner durch den erfindungsgemäßen Durchbruch 128 erhöht, wenn in der Matrize ein korrespondierender Vorsprung vorgesehen ist, der im eingelegten Zustand der Klammer zumindest ansatzweise in den Durchbruch eingreift.

In Fig. 1 ist ferner eine sich an die Verschlussklammer 100 anschließende benachbarte Verschlussklammer 150 angedeutet, welche mit einem ihrer ebenfalls nach außen abgebogene Schenkelenden mit dem Schenkelende 118 der Verschlussklammer 100 zusammenhängt. Der so gebildete Verbindungssteg 152 wird beim bzw. unmittelbar vor dem Verschließen durch ein Scherwerkzeug an dem sich von oben der Matrize nähernden Stempel durchtrennt wird.

Die Klammerschenkel 112, 114 weisen auf der Innenseite Ausnehmungen 132, 134 auf, die mittig bezogen auf die Klammerebene 136 eingeprägt sind und somit der Aufwerfung 130 im verschlossenen Zustand der Klammer gegenüber liegen, vgl. die Schnittdarstellungen in Fig. 2 und Fig. 3.

Im verschlossenem Zustand umgreift die Verschlussklammer 100' einen Zopfabschnitt 160 des Verpackungsmaterials der abgeteilten und verpackten Portion (Wurst) 162 und hält ihn in der in Fig. 3 dargestellten Weise fest. Hierin ist gut zu erkennen, wie der durch die Materialaufwerfung 130 gebildete Vorsprung den Zopfabschnitt 160 punktuell eindrückt und damit in der Klammerebene noch stärker rafft. Ferner wird das Verpackungsmaterial auf der gegenüberliegenden Seite in die Ausnehmungen 132, 134 in den Klammerschenkeln 112, 114 verdrängt. Dies sorgt für eine zusätzliche Verklemmung und Erhöhung der Abrutschfestigkeit der um den Zopf verschlossenen Klammer.

Die Abrutschfestigkeit wird weiter durch den Durchbruch 128 erhöht, in dessen Öffnung auf der Innenseite der Klammer auf Grund der Kompression des Zopfes 160 Verpackungsmaterial verdrängt wird und eine Nase 164 bildet.

Schließlich kann die Abrutschfestigkeit dadurch noch weiter gesteigert werden, dass die Gratbildung auf der Innenseite des Durchbruchs 128 erhöht wird. Ein scharfe Grat 138 am inneren Rand des Durchbruchs 128 erhöhen die (punktuelle) Druckbelastung auf den Zopfabschnitt 160 und damit die Reibung zwischen den verschlossenem Clip 100' und dem Verpackungsmaterialzopf 160 erhöhen. Die Stärke der Gratbildung hängt von der Wahl des Verpackungsmaterials und insbesondere von dessen Reiß- und Schnittfestigkeit ab.

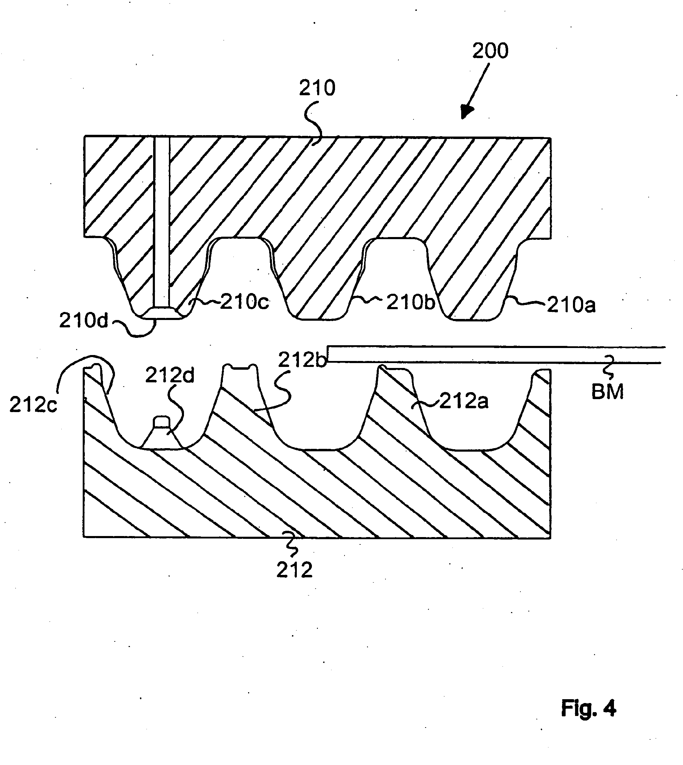

Fig. 4 zeigt eine Ausführungsform eines erfindungsgemäßen Prägewerkzeugs 200 zum Herstellen der Verschlussklammern 100, 100'. Das Prägewerkzeug 200 besteht aus einem Oberwerkzeug bzw. Stempel 210 und einem Unterwerkzeug bzw. einer Matrize 212. Das Oberwerkzeug 210 ist gegenüber dem Unterwerkzeug 212 in vertikaler Richtung reversibel verfahrbar. Selbstverständlich kann auch das Unterwerkzeug 212 gegenüber dem Oberwerkzeug 210 oder beide Werkzeuge 210, 212 gegeneinander verfahrbar sein. Bei der nachstehenden Beschreibung wird davon ausgegangen, dass lediglich das Oberwerkzeug 210 verfahren wird.

Sowohl das Ober- wie das Unterwerkzeug 210, 212 besitzen insgesamt drei Arbeits- bzw. Prägewerkzeugabschnitte 210a, 212a bzw. 210b, 212b bzw. 210c, 212c. Die drei Prägewerkzeugabschnitte 210a, 212a bzw. 210b, 212b bzw. 210c, 212c sind in einer horizontalen Ausrichtung, d.h. senkrecht zu der Verfahrrichtung des Oberwerkzeugs 210 zumindest äquidistant zueinander angeordnet.

Jeder der Prägewerkzeugabschnitte 210a, 212a bzw. 210b, 212b bzw. 210c, 212c besteht wiederum jeweils aus einem Oberwerkzeug bzw. Stempel 210a, 210b, 210c und jeweils einem Unterwerkzeug oder Matrize 212a, 212b, 212c. Die drei Prägewerkzeugabschnitte 210a, 212a bzw. 210b, 212b bzw. 210c, 212c dienen jeweils einem Bearbeitungsschritt, die aufeinanderfolgen, um aus einem Flachbandmaterial BM, welches in Fig. 4 von rechts mittels einer nicht weiter dargestellten Vorschubeinrichtung zugeführt wird, eine erfindungsgemäße Verschlussklammer 100, 100' herzustellen.

Der erste Prägewerkzeugabschnitt 210a, 212a erzeugt eine Grundform der Verschlussklammer 100, 100', in dem der Stempel 210a in die Matrize 212a einfährt und dabei dem entsprechenden Abschnitt des Flachbandmaterials BM die Grundform der in Fig. 1 gezeigten, erfindungsgemäßen Verschlussklammer 100, 100' verleiht.

Nach dem Zurückfahren des Oberwerkzeugs 210 wird anschließend mit der Vorschubeinrichtung das Flachbandmaterial BM soweit vorgeschoben, dass sich der in dem ersten Prägewerkzeugabschnitt 210, 212 bearbeitet Abschnitt des Flachbandmaterials BM in dem Bereich des nächsten Prägewerkzeugabschnitts, d.h. des zweiten Prägewerkzeugabschnitts 210b, 212b, befindet und dort in die Matrize 212b eingesetzt werden kann. Über dem ersten Prägewerkzeugabschnitt 210a, 212b befindet sich nun ein unbearbeiteter Abschnitt des Flachbandmaterials BM.

Daraufhin kann das Oberwerkzeuges 210 in Richtung des Unterwerkzeuges 212 verfahren werden, so dass die in dem ersten Prägewerkzeugabschnitt 210a, 212a vorgeformte Verschlussklammer 100, 100' eine weitere Bearbeitung bzw. Verformung erfährt. Insbesondere werden dabei die Einprägungen 120, 122 am oberen Ende der Verschlussklammer 100, 100' sowie die Ausnehmungen 132, 134 ausgeformt. Gleichzeitig wird an dem nach rechts erstreckenden Flachbandmaterial BM in dem ersten Prägewerkzeugabschnitt 210a, 212a wiederum die Grundform einer weiteren Verschlussklammer 100, 100' ausgebildet.

Nachdem das Oberwerkzeug 210 von dem Unterwerkzeug 212 abgehoben bzw. weggefahren worden ist, wird das Flachbandmaterial BM nach Herausnahme aus den Matrizen 212a, 212b nach links in der Weise weiter geschoben, dass die Verschlussklammer 100, 100', die in dem zweiten Prägewerkzeugabschnitt 210b, 212b bearbeitet worden ist, in den dritten Prägewerkzeugabschnitt 210c, 212c und die in dem ersten Prägewerkzeugabschnitt 210a, 212a bearbeitete Verschlussklammer 100, 100' in den zweiten Prägewerkzeugabschnitt 210b, 212b angeordnet werden kann. Darüber hinaus ist ein weiterer unbearbeiteter Abschnitt des Flachbandmaterials im Bereich des ersten Prägewerkzeug 210a, 212a angeordnet. Beim Herabfahren des Oberwerkzeuges 210 wird in dem ersten Prägewerkzeugabschnitt 210a, 212a die Grundform einer Verschlussklammer 100, 100' aus dem unbearbeiteten Abschnitt des Flachbandmaterials BM, in dem zweiten Prägewerkzeugabschnitt 210b, 212b die in dem ersten Prägewerkzeugabschnitt 210a, 212a im vorausgegangenen Bearbeitungsschritt hergestellte Grundform einer Verschlussklammer 100, 100' in der vorstehend beschriebenen Weise und in dem dritten Prägewerkzeugabschnitt 210c, 212c die in dem vorausgegangenen Bearbeitungsschritt in dem zweiten Prägewerkzeugabschnitt 210b, 212b hergestellte Verschlussklammer 100, 100' weiter bearbeitet.

Insbesondere wird im dritten Prägewerkzeugabschnitt 210c, 212c nunmehr in dem Klammerboden 110 die Materialaufwerfung 130 sowie der Durchbruch 128 hergestellt. Letzteres geschieht mit einer am Boden der Matrize 212c befindlichen Erhebung 212d, deren Form der herzustellenden Durchbrechung 128 angepasst ist. In dem Stempel 210c des dritten Prägewerkzeugabschnitts 210c, 212c ist eine entsprechende Ausnehmung 210d vorgesehen, die sich in dem dargestellten Ausführungsbeispiel in einer nicht näher bezeichnete Durchgangsdurchbrechung in dem Oberwerkzeug 210 ausdehnt. Diese Durchbrechung dient unter anderem dazu, Materialklumpen, die sich in der Ausnehmung 210d des Stempels 210c des dritten Prägewerkzeugabschnitts 210c, 212c verfangen haben, entfernen zu können.

Nach dem ein fertig bearbeiteter Abschnitt des Flachbandmaterials BM den dritten Prägewerkzeugabschnitt 210c, 212c verlassen hat, kann er mittels einer ebenfalls nicht näher dargestellten Trenneinrichtung als fertige Verschlussklammer 100, 100' abgetrennt werden.

### Bezugszeichenliste

- 100, 100': Verschlussklammer
- 110: Klammerboden
- 112: Klammerschenkel
- 114: Klammerschenkel
- 116: Schenkelende
- 118: Schenkelende
- 120: vertiefte Einprägung
- 122: vertiefte Einprägung
- 124: Verbindungsbogen
- 126: Verbindungsbogen
- 128: Durchbruch
- 130: Materialaufwerfung
- 132: Ausnehmung
- 134: Ausnehmung
- 136: Klammerebene
- 138: Grat
- 150: Verschlussklammer
- 152: Verbindungssteg
- 160: Zopf(-abschnitt)
- 162: Wurst
- 164: Nase
- 210: Stempel
- 212: Matrize
- 210a: Stempel des ersten Prägewerkzeugabschnitts 210a, 212a
- 210b: Stempel des zweiten Prägewerkzeugabschnitts 210b, 212b
- 210c: Stempel des dritten Prägewerkzeugabschnitts 210c, 212c
- 210d: Ausnehmung
- 212a: Matrize des ersten Prägewerkzeugabschnitts 210a, 212a
- 212b: Matrize des zweiten Prägewerkzeugabschnitts 210b, 212b
- 212c: Matrize des dritten Prägewerkzeugabschnitts 210c, 212c
- BM: Flachbandmaterial

## Patentansprüche

1. Verfahren zum Herstellen von Verschlussklammem (100, 100') aus band- oder drahtförmigem Material zum Verschließen von schlauch- oder beutelartigen Verpackungen, wobei entlang des band- oder drahtförmigen Materials ein im Wesentlichen wellenförmiges Profil mit aufeinanderfolgenden ersten und zweiten Scheitelpunkten geprägt wird, wobei der erste Scheitelpunkt einen Klammerboden (110), jeweils beidseits des ersten Scheitelpunkts angrenzende Flanken U-förmig abgebogene Klammerschenkel (112, 114) und der zweite Scheitelpunkt, bezogen auf die U-Form, nach außen abgebogene Schenkelenden (116, 118) bilden, an welchen zwei benachbarte Verschlussklammern (100,100') trennbar zusammenhängen, **dadurch gekennzeichnet, dass** das band- oder drahtförmige Material nach innen, bezogen auf die U-Form, durchstochen wird.

2. Verfahren nach Anspruch 1,
**dadurch gekennzeichnet, dass** das band- oder drahtförmige Material etwa mittig im Bereich des Klammerbodens (110) durchstochen wird.

3. Verfahren nach einem der vorstehenden Ansprüche,
**dadurch gekennzeichnet, dass** das band- oder drahtförmige Material während des Prägens des wellenförmigen Profils durchstochen wird.

4. Verfahren nach einem der vorstehenden Ansprüche,
**dadurch gekennzeichnet, dass** das band- oder drahtförmige Material mit einem Dorn durchstochen wird.

5. Verfahren nach einem der vorstehenden Ansprüche,
**dadurch gekennzeichnet, dass** dem band- oder drahtförmigen Material im Bereich der Schenkelinnenseite der Verschlussklammer (100, 100') in Längsrichtung Ausnehmungen (132, 134) eingeprägt werden.

6. Verschlussklammer aus band- oder drahtförmigem Material zum Verschließen von schlauch- oder beutelartigem Verpackungsmaterial, welche einen Klammerboden (110) und zwei U-förmig abgebogene Klammerschenkel (112, 114) aufweist, deren Schenkelenden (116, 118), bezogen auf die U-Form, nach außen abgebogen sind und einen Teil eines trennbaren Verbinddungsstegs (152) zu benachbarten Verschlussklammem (100, 100') bilden, **dadurch gekennzeichnet, dass** die Verschlussklammer einen Durchbruch (128) mit einer Materialaufwerfung (130) auf deren Innenseite aufweist.

7. Verschlussklammer nach Anspruch 6,
**dadurch gekennzeichnet, dass** der Durchbruch (128) mit Materialaufwerfung (130) einen Grat (138) aufweist.

8. Verschlussklammer nach Anspruch 6 oder 7,
**dadurch gekennzeichnet, dass** der Durchbruch (128) mit Materialaufwerfung (130) etwa mittig im Bereich des Klammerbodens (110) angeordnet ist.

9. Verschlussklammer nach einem der Ansprüche 6 bis 8,
**dadurch gekennzeichnet, dass** die Materialaufwerfung (130) im Wesentlichen höckerförmig ausgebildet ist.

10. Verschlussklammer nach einem der Ansprüche 6 bis 9,
**dadurch gekennzeichnet, dass** die Verschlussklammer (100, 100') auf den Schenkelinnenseiten in Längsrichtung Ausnehmungen (132, 134) aufweist.

11. Prägewerkzeug zum Herstellen von Verschlussklammern (100, 100') aus band- oder drahtförmigem Material nach einem Verfahren gemäß einem der Ansprüche 1 bis 5,
**dadurch gekennzeichnet, dass** wenigstens drei Prägewerkzeugabschnitte (210a, 212a; 210b, 212b; 210c, 212c) nebeneinander vorgesehen sind, von denen der erste Prägewerkzeugabschnitt (210a, 212a) dazu eingerichtet ist, die Grundform der Verschlussklammer (100) zu formen, der zweite Prägewerkzeugabschnitt (210b, 212b) dazu eingerichtet ist, Einprägungen (120, 122) am oberen Ende der Verschlussklammer (100, 100') sowie Ausnehmungen (132, 134) auszuformen, und der dritte Prägewerkzeugabschnitt (210c, 212c) dazu eingerichtet ist, in dem Klammerboden (110) einen Durchbruch (128) mit einer Materialaufwerfung (130) auszuformen.

## Claims

1. A method of manufacturing closing clips (100, 100') from strip- or wire-type material for closing tubular or bag-type packaging, wherein a substantially undulating profile with successive first and second peaks is stamped along the strip- or wire-type material, wherein the first peak forms a clip base (110), respective adjoining flanks on either side of the first peak form clip arms (112, 114) which are bent into the shape of a U and the second peak forms, relative to the U shape, outwardly bent arm ends (116, 118) to which two adjacent closing clips (100, 100') are detachably connected, **characterised in that** the strip- or wire-type material is pierced inwards relative to the U shape.

2. A method according to claim 1, **characterised in that** the strip- or wire-type material is pierced approximately centrally in the region of the clip base (110).

3. A method according to either one of the preceding claims, **characterised in that** the strip- or wire-type material is pierced during the process of stamping the undulating profile.

4. A method according to any one of the preceding claims, **characterised in that** the strip- or wire-type material is pierced by a punch.

5. A method according to any one of the preceding claims, **characterised in that** recesses (132, 134) are stamped into the strip- or wire-type material in the region of the inside of the arms of the closing clip (100, 100') in the longitudinal direction.

6. A closing clip made of strip- or wire-type material for closing tubular or bag-type packaging material and having a clip base (110) and two clips arms (112, 114) which are bent into the shape of a U, the arm ends (116, 118) of which are bent outwards relative to the U shape and form part of a detachable connecting piece (152) for connection to adjacent closing clips (100, 100'), **characterised in that** the closing clip has an opening (128) with a raised material edge (130) on its inside.

7. A closing clip according to claim 6, **characterised in that** the opening (128) with the raised material edge (130) has a burr (138).

8. A closing clip according to claim 6 or 7, **characterised in that** the opening (128) with the raised material edge (130) is arranged approximately centrally in the region of the clip base (110).

9. A closing clip according to any one of claims 6 to 8, **characterised in that** the raised material edge (130) is substantially hump-shaped.

10. A closing clip according to any one of claims 6 to 9, **characterised in that** the closing clip (100, 100') has recesses (132, 134) on the insides of the arms in the longitudinal direction.

11. A stamping tool for producing closing clips (100, 100') from strip- or wire-type material by a method according to any one of claims 1 to 5, **characterised in that** at least three stamping-tool parts (210a, 212a; 210b, 212b; 210c, 212c) are provided side by side, of which the first stamping-tool part (210a, 212a) is designed to form the basic shape of the closing clip (100), the second stamping-tool part (210b, 212b) is designed to form impressions (120, 122) at the upper end of the closing clip (100, 100') as well as recesses (132, 134), and the third stamping-tool part (210c, 212c) is designed to form an opening (128) with a raised material edge (130) in the clip base (110).

## Revendications

1. Procédé de fabrication d'agrafes (100, 100') de fermeture, en matériau en forme de bande ou de fil, pour la fermeture d'emballages de type tube souple ou sachet, dans lequel on imprime le long du matériau en forme de bande ou en forme de fil un profil sensiblement ondulé, ayant des premiers points de sommet et des deuxièmes points de sommet qui se succèdent, le premier point de sommet formant un fond (110) d'agrafe, des flancs voisins respectivement des deux côtés du premier point de sommet formant des branches (112, 114) d'agrafe coudées en forme de U et le deuxième point de sommet formant, rapporté à la forme en U, des extrémités (116, 118) de branche coudées vers l'extérieur et auxquelles sont rattachées de manière séparable deux agrafes (100, 100') de fermeture voisines,
**caractérisé en ce que** le matériau en forme de bande ou en forme de fil est transpercé vers l'intérieur, rapporté à la forme en U.

2. Procédé suivant la revendication 1,
**caractérisé en ce que** le matériau en forme de bande ou en forme de fil est transpercé à peu près au milieu dans la région du fond (110) de l'agrafe.

3. Procédé suivant l'une des revendication précédentes,
**caractérisé en ce que** le matériau en forme de bande ou en forme de fil est transpercé pendant l'impression du profil ondulé.

4. Procédé suivant l'une des revendications suivantes, **caractérisé en ce que** le matériau en forme de bande ou de fil est transpercé pendant l'impression du profil ondulé.

5. Procédé suivant l'une des revendications suivantes, **caractérisé en ce que** des évidements (132, 134) dans la direction longitudinale sont estampés dans le matériau en forme de bande ou en forme dé fil dans la région de la base intérieure des branches des agrafes (100, 100') de fermeture.

6. Agrafe de fermeture en un matériau en forme de bande et en forme de fil, pour fermer de la matière d'emballage en forme de tube souple ou de sachet, qui a un fond (110) d'agrafe et deux branches (112, 114) d'agrafe coudées en forme de U, dont les extrémités (116, 118) de branche sont coudées vers l'extérieur, rapporté à la forme en U, et forment une partie d'une barrette (152) séparable de liaison vers des agrafes (100, 100') de fermeture voisines, **caractérisée en ce que** l'agrafe de fermeture a, sur sa face intérieure, un perçage (128) ayant un épanouissement (130) de matière.

7. Agrafe de fermeture suivant la revendication 6, **caractérisée en ce que** le perçage (128) ayant un épanouissement (130) de matière a une bavure (138).

8. Agrafe de fermeture suivant la revendication 6 ou 7, **caractérisée en ce que** le perçage (128) ayant un épanouissement (130) de matière est disposé à peu près au milieu de la région du fond (110) de l'agrafe.

9. Agrafe de fermeture suivant la revendication 6 à 8, **caractérisée en ce que** l'épanouissement (130) de matière est constitué sensiblement sous la forme d'une bosse.

10. Agrafe de fermeture suivant la revendication 6 à 9, **caractérisée en ce que** l'agrafe (100, 100') de fermeture a des évidement (132, 134) dans la direction longitudinale sur les faces intérieures des branches.

11. Outil d'estampage pour fabriquer des agrafes (100, 100') de fermeture en matériau en forme de bande ou en forme de fil, suivant le procédé selon l'une des revendications 1 à 5, **caractérisé en ce qu'**il est prévu côte à côte au moins trois parties (210a, 212a, 210b, 212b, 210c, 212c) d'outil d'estampage, dont la première partie (210a, 212a) est conçue pour former la forme de base de l'agrafe (100) de fermeture, la deuxième partie (210b, 212b) est conçue pour former des empreintes (120, 122) à l'extrémité supérieure de l'agrafe (100, 100') de fermeture ainsi que des évidements (132, 134) et la troisième partie (210c, 212c) est conçue pour former dans le fond (110) de l'agrafe un perçage (128) ayant un épanouissement (130) de matière.
